# EUROPÄISCHE PATENTANMELDUNG

(11) **EP 0 556 678 A2**
(43) Veröffentlichungstag der Anmeldung: **25.08.1993**
(21) Anmeldenummer: 93101914.5
(22) Anmeldetag: 08.02.1993
(51) Int. Cl.: G01F 23/24, G01F 25/00

(54) **Einrichtung zur Überwachung des Flüssigkeitsstandes**

(30) Priorität: 19.02.1992 DE 4205002
(71) Anmelder: GESTRA AG, D-28215 Bremen (DE)
(72) Erfinder: Föller, Werner, W-2805 Stuhr 1 (DE)
(74) Vertreter: Eisenführ, Speiser & Partner

(57) **Zusammenfassung**

Bei einer bekannten Einrichtung gelangt eine beträchtliche Menge des zur Überprüfung eingeblasenen Stickstoffes aus dem innenliegenden Gehäuse in den umgebenden Behälter. Dies kann zu einer Verschlechterung des Wärmeüberganges und damit zu Störungen in der angeschlossenen Anlage führen. Bei der neuen Einrichtung soll die Stickstoffmenge auf ein Minimum reduziert werden.

Im Gehäuse (4) befindet sich ein durch eine Feder (15)/sein Eigengewicht im Öffnungssinn belastetes Verschlußteil (11). Wird Stickstoff eingeblasen, bringt dessen Druck das Verschlußteil (11) in Schließstellung. Die Druckausgleichsöffnung (5) ist dann verschlossen, so daß kein Stickstoff in den Behälter (1) entweicht.

Einrichtung zur überwachung des Flüssigkeitsstandes in Behältern, bei denen eine Überprüfung der Funktionsfähigkeit der Einrichtung gefordert wird.

## Beschreibung

Die Erfindung betrifft eine Einrichtung zur Überwachung des Flüssigkeitsstandes der im Oberbegriff des Hauptanspruches spezifizierten Art.

Derartige Einrichtungen bieten außer der Überwachung des Flüssigkeitsstandes die Möglichkeit, ihre Funktionsfähigkeit zu überprüfen. Eine solche Prüfung ist z. B. bei Dampfkesseln für einen "Betrieb ohne ständige Beaufsichtigung" notwendig.

Bei einer bekannten Ausführung dieser Einrichtung (DE-PS 30 13 019 wird zur Prüfung ein gasförmiges Medium - vorzugsweise Stickstoff - mit einem höheren Druck als dem im Behälter herrschenden in das Gehäuse eingeleitet. Dadurch wird die im Gehäuse befindliche Flüssigkeit durch die unterhalb der Füllstand-Sollhöhe angeordnete Durchtrittsöffnung in den Behälter hinausgedrängt. Sobald dabei der Flüssigkeitsspiegel im Gehäuse die Sollhöhe unterschreitet, gibt der Niveausensor ein diesbezügliches Niveausignal. Im Falle einer Störung - z. B. verschlossene Durchtrittsöffnung oder defekter Niveausensor - unterbleibt das Niveausignal. Aufgrund des Niveausignals bzw. nach Ablauf einer festgelegten Prüfzeit wird die Zufuhr des gasförmigen Mediums unterbrochen. Bei intakter Einrichtung stellt sich in dem Gehäuse umgehend wieder der gleiche Flüssigkeitsstand wie im Behälter ein. Der intakte Niveausensor gibt ein diesbezügliches Niveausignal. Die Niveausignale während des Prüfzyklus oder ihr Ausbleiben geben Aufschluß über die Funktionsfähigkeit der Einrichtung.

Während der Prüfung dringt nicht nur die Flüssigkeit aus dem Gehäuse in den Behälter, sondern es gelangt auch gasförmiges Medium aus dem Gehäuse in den Behälter und dort in den Dampf. Dies kann zu Beeinträchtigungen führen, wie z. B. Verschlechterung des Wärmeüberganges und damit zu Störungen in der angeschlossenen Anlage.

Der Erfindung liegt nun die Aufgabe zugrunde, eine Einrichtung der eingangs genannten Art zu schaffen, bei der die zur Prüfung benötigte Menge gasförmigen Mediums auf ein Minimum beschränkt ist.

Diese Aufgabe wird durch die im Anspruch 1 angegebenen Merkmale gelöst.

Der Druckausgleichsöffnung ist ein Verschlußteil zugeordnet, das sich im Normalbetrieb aufgrund der ständig wirkenden öffnungskraft in Offenstellung befindet; die obenliegende Druckausgleichsöffnung ist vollständig geöffnet. Im Gehäuse kann sich - eine freie untenliegende Durchtrittsöffnung vorausgesetzt - der gleiche Flüssigkeitsstand einstellen wie im Behälter. Eine exakte Überwachung des Flüssigkeitsstandes ist somit ermöglicht.

Für eine Überprüfung der Einrichtung wird dem Gehäuse über die Zuleitung gasförmiges Medium mit einem Druck zugeführt, der den im Behälter herrschenden Druck übersteigt. Das zuströmende Medium erzeugt eine Schließkraft für das Verschlußteil. Sie überschreitet die öffnungskraft und bringt das Verschlußteil in Schließstellung, so daß die Druckausgleichsöffnung verschlossen ist. Während der Prüfung dringt somit kein Medium aus dem Gehäuse in den Behälter. Wird zum Abschluß der Prüfung die Mediumzufuhr unterbrochen, sinkt umgehend der Druck im Gehäuse via Durchtrittsöffnung wieder auf den Wert im Behälter, dabei entfällt die Schließkraft am Verschlußteil. Es wird durch die stets wirkende öffnungskraft in Offenstellung gebracht.

Die Druckausgleichsöffnung ist wieder voll geöffnet, so daß sich im Gehäuse wieder der gleiche Flüssigkeitsstand wie im Behälter einstellen kann.

Durch das Verschließen der Druckausgleichsöffnung während der Prüfung wird die benötigte Menge gasförmigen Mediums auf die der Absenkung des Flüssigkeitsspiegels im Gehäuse entsprechende Menge minimiert.

Die Unteransprüche haben besonders vorteilhafte Weiterbildungen der Erfindung zum Gegenstand.

Durch die Merkmale des Anspruches 2 wird die Schließkraft für das Verschlußteil in einfacher Weise mittels Staudruck erzeugt, den das gasförmige Medium beim Einströmen in das Gehäuse auf das Verschlußteil ausübt. Die erforderliche, ständig auf das Verschlußteil einwirkende öffnungskraft ist gemäß Anspruch 3 bevorzugt durch eine Feder zu erzielen.

Der Anspruch 4 betrifft eine vorteilhafte Weiterbildung der Erfindung, bei der die Zuleitung des gasförmigen Mediums zugleich als Führung für das hubbeweglich ausgebildete Verschlußteil fungiert. Einer guten Führung des Verschlußteiles dienen ergänzend auch die Ansprüche 5 und 6. Die Ansprüche 7 bis 9 zielen darauf ab, über den gesamten Schließhub eine besonders hohe Schließkraft auf das hubbewegliche Verschlußteil auszuüben.

Der Anspruch 10 sieht anstelle eines hubbeweglichen Verschlußteiles ein schwenkbewegliches Verschlußteil für die Druckausgleichsöffnung vor. Durch die Weiterbildung nach Anspruch 11 wird die öffnungskraft des Verschlußteiles durch dessen Eigengewicht erzeugt; eine Feder kann entfallen. Aufgrund der Merkmale des Anspruches 12 ist das schwenkbewegliche Verschlußteil auf dem gesamten Schließweg einer besonders hohen Schließkraft ausgesetzt.

In der Zeichnung sind Ausführungsbeispiele der erfindungsgemäßen Einrichtung zur Überwachung des Flüssigkeitsstandes in einem Behälter dargestellt. Es zeigt:
Fig. 1 einen Ausschnitt eines Behälters mit der Einrichtung zur Flüssigkeitsstand-Überwachung mit offener Druckausgleichsöffnung,
Fig. 2 einen Ausschnitt der Einrichtung aus Fig. 1 in anderem Maßstab und mit geschlossener Druckausgleichsöffnung,
Fig. 3 ausschnittweise eine zweite Ausführung der Einrichtung mit geschlossener Druckausgleichsöffnung,
Fig. 4 ausschnittweise eine dritte Ausführung der Einrichtung mit offener Druckausgleichsöffnung und
Fig. 5 ausschnittweise eine vierte Ausführung der Einrichtung, gleichfalls mit offener Druckausgleichsöffnung.

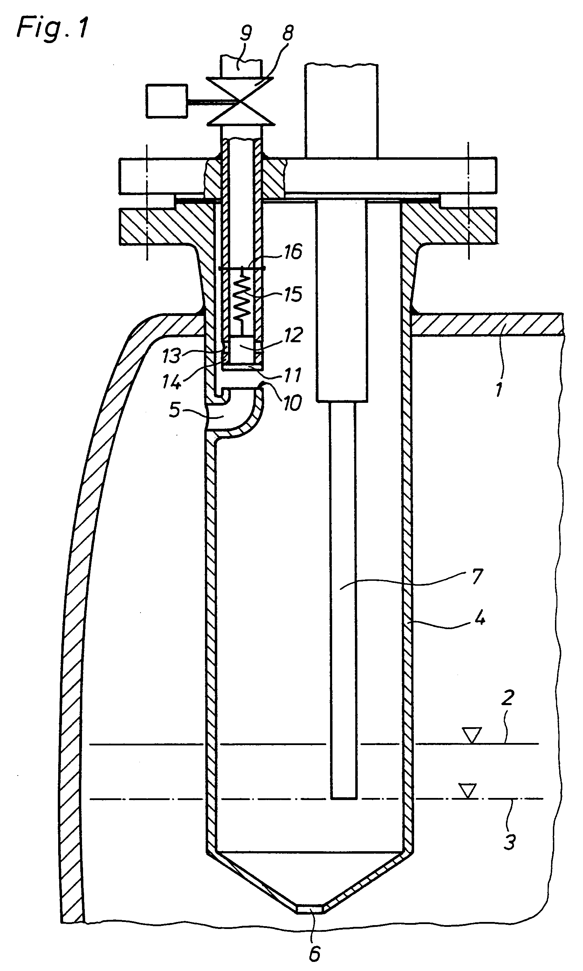

In Fig. 1 ist ein Behälter 1, vorzugsweise ein Dampfkessel oder ein Heißwasserkessel , bis zu einem Flüssigkeitsstand 2 mit Flüssigkeit gefüllt. Der Behälter 1 ist mit einer Einrichtung zur Überwachung des Flüssigkeitsstandes 2 ausgerüstet, deren Aufgabe darin besteht, ein eventuelles Absinken des Flüssigkeitsstandes 2 unter ein Mindestniveau 3 zu signalisieren.

Zu diesem Zweck ist im Behälter 1 ein als senkrechtes Rohr ausgebildetes Gehäuse 4 angeordnet. Dessen unteres Ende befindet sich unterhalb des Mindestniveaus 3, während es mit seinem oberen Ende aus dem Behälter 1 herausragt. Im Behälter 1 weist das Gehäuse 4 oberhalb des höchsten zu erwartenden Flüssigkeitsstandes seitlich eine die Innenräume des Behälters 1 und des Gehäuses 4 miteinander verbindende Druckausgleichsöffnung 5 auf. Unterhalb des Mindestniveaus 3 ist das Gehäuse 4 mit einer Durchtrittsöffnung 6 für die im umgebenden Behälter 1 befindliche Flüssigkeit versehen. Von oben erst reckt sich ein Niveausensor 7, beispielsweise eine Elektrode, im Gehäuse 4 bis zu dem Mindestniveau 3 hinab. Außerdem ragt von oben eine mit einer Absperrarmatur 8 versehene Zuleitung 9 für ein gasförmiges Medium in das Gehäuse 4 hinein.

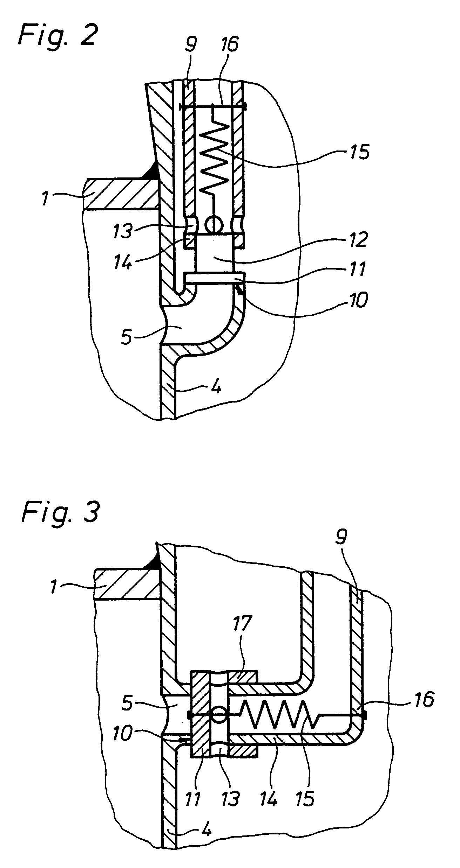

In der Ausführungsform nach den Fig. 1 und 2 ist die Druckausgleichsöffnung 5 im Gehäuse 4 in einem Bogen nach oben geführt. Am oberen Ende der Druckausgleichsöffnung 5 ist ein Ventilsitz 10 angeordnet, der dem unteren Ende der Zuleitung 9 mit Abstand gegenüberliegt. Mit dem Ventilsitz 10 wirkt ein hubbewegliches Verschlußteil 11 zusammen, das auf seiner der Druckausgleichsöffnung 5 abgewandten Seite einen Kolben 12 aufweist. Die Zuleitung 9 ist an ihrem unteren, gleichachsig zum Ventilsitz 10 angeordneten Ende mit radialen Austrittsöffnungen 13 versehen. Außerdem fungiert ihr unteres Ende als Führungshülse 14 für den Kolben 12. Eine Feder 15 ist an ihrem oberen Ende an einem ortsfesten Widerlager 16 gehalten. Während sie mit ihrem unteren Ende eine öffnungskraft auf das mit dem Ventilsitz 10 der Druckausgleichsöffnung 5 zusammenwirkende Verschlußteil 11 ausübt.

Während der Überwachungsfunktion der Einrichtung ist die Absperrarmatur 8 geschlossen. Das Verschlußteil 11 wird gegenüber dem Ventilsitz 10 durch die Wirkung der Feder 15 in Offenstellung gehalten, so daß die Druckausgleichsöffnung 5 vollständig offen ist. Die Offenstellung des Verschlußteiles 11 wird durch das untere Ende der Führungshülse 14 definiert, an dem es axial abstützend anliegt. Zugleich werden die Austrittsöffnungen 13 der Zuleitung 9 von dem Kolben 12 überdeckt (s. Fig. 1).

Wenn die Druckausgleichsöffnung 5 und die Durchtrittsöffnung 6 des Gehäuses 4 beide offen sind, stellt sich im Gehäuse 4 der gleiche Flüssigkeitsstand 2 ein wie im umgebenden Behälter 1. Durch den Niveausensor 7 im Gehäuse 4 wird somit signalisiert, ob der Flüssigkeitsstand 2 in Behälter 1 sich oberhalb oder unterhalb des Mindestniveaus 3 befindet. Die gewonnenen Signale können - wie üblich - in Meldungen, z. B. Wassermangel, und/oder Maßnahmen - z. B. Flüssigkeitszufuhr und/oder Brennerabschaltung - umgesetzt werden.

Zur Überprüfung der Funktionsfähigkeit der Einrichtung wird die Absperrarmatur 8 geöffnet. In den gehäuseseitigen Abschnitt der Zuleitung 9 strömt dann ein gasförmiges Medium, vorzugsweise Stickstoff, bis an den Kolben 12. Das Medium übt über den Kolben 12 eine Schließkraft auf die der Druckausgleichsöffnung 5 abgewandte Seite des Verschlußteiles 11 aus, die die öffnungskraft der Feder 15 übersteigt. Das Verschlußteil 11 wird dadurch in Schließrichtung bewegt, bis es auf dem Ventilsitz 10 aufliegt und die Druckausgleichsöffnung 5 verschließt. Der Kolben 13 gibt dabei die Austrittsöffnungen 13 der Zuleitung 9 frei (s. Fig. 2), so daß gasförmiges Medium aus der Zuleitung 9 in das Gehäuse 4 eindringt. Der Druck und die Menge des der Zuleitung 9 zuströmenden Mediums sind so groß, daß auch nach Freigeben der Austrittsöffnungen 13 die für ein zuverlässiges Schließen notwendige Schließkraft auf das Verschlußteil 11 einwirkt. Das über die Austrittsöffnungen 13 in das Gehäuse 4 eindringende gasförmige Medium führt dort zu einem Druckanstieg, so daß dann im Gehäuse 4 ein höherer Druck herrscht als im Behälter 1. Infolge dessen wird die Flüssigkeit durch die Durchtrittsöffnung 6 nach unten aus dem Gehäuse 4 hinausgepreßt. Sobald dabei der Flüssigkeitsstand 2 das Mindestniveau 3 unterschreitet, erzeugt der Niveausensor 7 ein entsprechendes Signal. Damit ist ersichtlich, daß zwei für die Funktionsfähigkeit der Einrichtung unerläßliche Merkmale gegeben sind, nämlich: offene Durchtrittsöffnung 6 und intakter Niveausensor 7.

Bei Auftreten des Signals des Niveausensors 7 oder aber spätestens nach einer festgelegten Prüfdauer wird die Absperrarmatur 8 wieder geschlossen. Via Durchtrittsöffnung 6 sinkt im Gehäuse 4 und im gehäuseseitigen Abschnitt der Zuleitung 9 der Druck wieder ab, bis Druckgleichheit mit dem Behälter 1 besteht. Dadurch entfällt die Schließkraft am Verschlußteil 11, so daß es von der Feder 15 in Offenstellung (s. Fig. 1) gebracht, also die Druckausgleichsöffnung 5 wieder geöffnet wird. Im Gehäuse 4 stellt sich umgehend wieder der gleiche Flüssigkeitsstand 2 wie im Behälter 1 ein, was vom Niveausensor 7 signalisiert wird. Dieses Signal bedeutet u. a. auch, daß die Druckausgleichsöffnung 5 wieder offen ist, dort also kein Defekt vorliegt.

Bleiben die erwähnten Signale des Niveausensors 7 während der Zufuhr des gasförmigen Mediums bzw. nach Beendigung der Zufuhr aus, ist die Funktion der Einrichtung zur Flüssigkeitsstand-überwachung gestört, z. B. defekter Niveausensor 7, verstopfte Durchtrittsöffnung 6.

Während der geschilderten Prüfung wird über die Zuleitung 9 eine begrenzte Menge gasförmigen Mediums dem Gehäuse 4 zugeführt, die der Absenkung des Flüssigkeitsspiegels 2 im Gehäuse 4 entspricht. Da die Druckausgleichsöffnung 5 in dieser Phase verschlossen ist, dringt während dieser Zeit kein gasförmiges Medium aus dem Gehäuse 4 in den umgebenden Behälter 1. Dementsprechend ist die Menge zugeführten Mediums auf das absolute Minimum reduziert.

In der Ausführungsform nach Fig. 3 ist der Ventilsitz 10 der Druckausgleichsöffnung 5 nicht horizontal, sondern vertikal angeordnet. Die Zuleitung 9 weist einen Bogen auf, der mit Abstand vor dem Ventilsitz 10 gleichachsig zu ihm endet. Das dazwischen angeordnete Verschlußteil 11 ist auf seiner der Druckausgleichsöffnung 5 abgewandten Seite mit einer die Führungshülse 14 umgebenden Hülse 17 mit radialen Austrittsöffnungen 13 versehen. Diese sind in der Offenstellung des Verschlußteiles 11 durch die Führungshülse 14 verdeckt, in Schließstellung des Verschlußteiles 11 jedoch geöffnet. Die Zuleitung 9 fungiert in dieser Ausführung unmittelbar als Widerlager für die Feder 15.

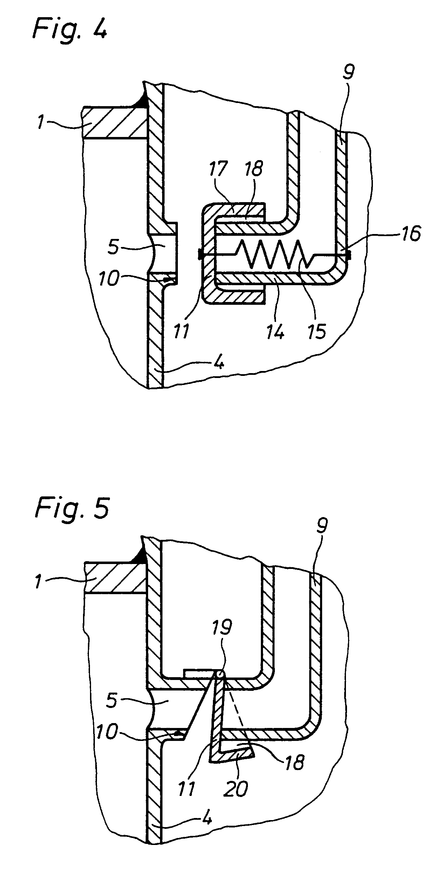

Die Ausführung nach Fig. 4 unterscheidet sich von jener aus Fig. 3 dadurch, daß die Hülse 17 des Verschlußteiles 11 keine radialen Austrittsöffnungen 13 aufweist. Statt dessen ist zwischen der Hülse 17 des Verschlußteiles 11 und der Führungshülse 14 der Zuleitung 9 ein Längskanal 18 für das gasförmige Medium vorgesehen. Aus der starken Umlenkung des Mediums von der Zuleitung 9 in den engen Längskanal 18 resultiert eine besonders große Schließkraft für das Verschlußteil 11.

In Fig. 5 ist das Verschlußteil 11 als Klappe ausgebildet, die an ihrem oberen Rand an einem Lager 19 schwenkbeweglich zwischen dem Ventilsitz 10 und dem austrittsseitigen Ende der Zuleitung 9 gehalten ist. Auf seiner der Druckausgleichsöffnung 5 abgewandten Seite weist das Verschlußteil 11 eine das austrittsseitige Ende der Zuleitung 9 umgebende Schürze 20 auf. Zwischen dieser und der Zuleitung 9 besteht analog der Ausführung nach Fig. 4 ein Längskanal 18 für das gasförmige Medium. Der Ventilsitz 10 verläuft so schräg, daß er mit seinem oberen Bereich gegenüber seinem unteren Bereich vorsteht. Eine Feder ist nicht vorgesehen; das Eigengewicht des Verschlußteiles 11 erzeugt die öffnungskraft, durch die es in der im wesentlichen senkrechten Offenstellung gehalten wird (s. Fig. 5).

Bezüglich der überwachung des Flüssigkeitsstandes im Behälter und auch für die Prüfung der Funktionsfähigkeit der Einrichtung gilt für die Ausführungen nach den Fig. 3 bis 5 das zu den Fig. 1 und 2 Beschriebene gleichermaßen.

Anstelle einer vollständigen Absperrung der Druckausgleichsöffnung 5, wie sie in den Ausführungen nach den Fig. 1 bis 5 erfolgt, wäre auch eine gewisse Leckage denkbar. Die benötigte Menge gasförmigen Mediums würde dann immer noch drastisch reduziert. Statt einer einzigen Druckausgleichsöffnung 5 könnten durchaus mehrere vorgesehen werden, die entweder durch mehrere separate Verschlußteile oder durch ein einziges gemeinsames Verschlußteil abgesperrt werden.

### Bezugszeichenliste:

- 1: Behälter
- 2: Flüssigkeitsstand
- 3: Mindestniveau
- 4: Gehäuse
- 5: Druckausgleichsöffnung
- 6: Durchtrittsöffnung
- 7: Niveausensor
- 8: Absperrarmatur
- 9: Zuleitung
- 10: Ventilsitz
- 11: Verschlußteil
- 12: Kolben
- 13: Austrittsöffnung
- 14: Führungshülse
- 15: Feder
- 16: Widerlager
- 17: Hülse
- 18: Längskanal
- 19: Lager
- 20: Schürze

## Patentansprüche

1. Einrichtung zur Überwachung des Flüssigkeitsstandes in einem Behälter mit
- einem im Behälter angeordneten Gehäuse, das mindestens zwei in unterschiedlicher Höhe vorgesehene, die Innenräume des Behälters und des Gehäuses miteinander verbindende Öffnungen aufweist, von denen die untere als Durchtrittsöffnung für die im Behälter befindliche Flüssigkeit dient, während die obere Öffnung eine Druckausgleichsöffnung bildet,
- mindestens einem im Gehäuse angeordneten Niveausensor und
- einer in das Gehäuse führenden Zuleitung für ein unter Druck stehendes gasförmiges Medium zum momentanen Absenken des Flüssigkeitsstandes im Gehäuse zur Überprüfung der Funktionsfähigkeit der Einrichtung,
**dadurch gekennzeichnet**, daß
- im Gehäuse (4) mindestens ein Verschlußteil (11) beweglich angeordnet ist, mit einer Schließstellung, in der es bei der überprüfung der Einrichtung die Druckausgleichsöffnung (5) zumindest weitgehend verschließt, und einer Offenstellung, in der die Druckausgleichsöffnung (5) bei überwachung des Flüssigkeitsstandes offen ist,
- Mittel (15; 11, 20) vorgesehen sind, die eine Öffnungskraft auf das Verschlußteil (11) ausüben, und
- die Zuleitung (9) im Gehäuse (4) im Bereich des Verschlußteiles (11) endet, und zwar so, daß aus der Zuleitung (9) ausströmendes Medium eine Schließkraft auf das Verschlußteil (11) ausübt.

2. Einrichtung zur überwachung des Flüssigkeitsstandes nach Anspruch 1, **dadurch gekennzeichnet,** daß das austrittsseitige Ende der Zuleitung (9) auf die der Druckausgleichsöffnung (5) abgewandte Stirnseite des Verschlußteiles (11) gerichtet ist.

3. Einrichtung zur überwachung des Flüssigkeitsstandes nach einem oder beiden der Ansprüche 1 und 2, **dadurch gekennzeichnet,** daß die die Öffnungskraft ausübenden Mittel als Feder (15) ausgebildet sind, deren eines Ende an einem Widerlager (16) angreift und deren anderes Ende auf das Verschlußteil (11) einwirkt.

4. Einrichtung zur überwachung des Flüssigkeitsstandes nach einem oder mehreren der vorhergehenden Ansprüche, **dadurch gekennzeichnet,** daß das Verschlußteil (11) hubbeweglich ausgebildet ist und am austrittsseitigen Ende der Zuleitung (9) eine Führungshülse (14) für das Verschlußteil (11) vorgesehen ist.

5. Einrichtung zur überwachung des Flüssigkeitsstandes nach Anspruch 4, **dadurch gekennzeichnet,** daß das Verschlußteil (11) auf seiner der Druckausgleichsöffnung (5) abgewandten Seite eine die Führungshülse (14) umgebende Hülse (17) aufweist.

6. Einrichtung zur überwachung des Flüssigkeitsstandes nach Anspruch 4, **dadurch gekennzeichnet,** daß das Verschlußteil (11) auf seiner der Druckausgleichsöffnung (5) abgewandten Seite einen in der Führungshülse (14) angeordneten Kolben (12) aufweist.

7. Einrichtung zur überwachung des Flüssigkeitsstandes nach Anspruch 5 oder 6, **dadurch gekennzeichnet,** daß zwischen der Führungshülse (14) und der Hülse (17)/dem Kolben (12) des Verschlußteiles (11) ein Längskanal (18) vorhanden ist.

8. Einrichtung zur überwachung des Flüssigkeitsstandes nach Anspruch 5 oder 6, **dadurch gekennzeichnet,** daß die Führungshülse (14) der Zuleitung (9) mindestens eine radiale Austrittsöffnung (13) aufweist, die in Offenstellung des Verschlußteiles (11) durch die Hülse (17)/den Kolben (12) des Verschlußteiles (11) überdeckt, jedoch in Schließstellung des Verschlußteiles (11) geöffnet ist.

9. Einrichtung zur überwachung des Flüssigkeitsstandes nach Anspruch 5 oder 6, **dadurch gekennzeichnet,** daß die Hülse (17)/der Kolben (12) des Verschlußteiles (11) mindestens eine radiale Austrittsöffnung (13) aufweist, die in Offenstellung des Verschlußteiles (11) durch die Führungshülse (14) überdeckt, jedoch in Schließstellung des Verschlußteiles (11) geöffnet ist.

10. Einrichtung zur Überwachung des Flüssigkeitsstandes nach einem oder mehreren der Ansprüche 1 bis 3, **dadurch gekennzeichnet,** daß das Verschlußteil (11) als Klappe schwenkbeweglich zwischen der Druckausgleichsöffnung (5) und dem austrittsseitigen Ende der Zuleitung (9) angeordnet ist.

11. Einrichtung zur Überwachung des Flüssigkeitsstandes nach Anspruch 10, **dadurch gekennzeichnet,** daß das Verschlußteil (11) an seinem oberen Rand schwenkbeweglich gelagert und am Gehäuse (4) ein die Druckausgleichsöffnung (5) umgebender Ventilsitz (10) für das Verschlußteil (11) vorgesehen ist, der so schräg verläuft, daß der obere Bereich des Ventilsitzes (10) gegenüber dem unteren Bereich vorsteht.

12. Einrichtung zur überwachung des Flüssigkeitsstandes nach Anspruch 10 oder 11, **dadurch gekennzeichnet,** daß das Verschlußteil (11) eine die Zuleitung (9) am austrittsseitigen Ende umgebende Schürze (20) aufweist.
